# EUROPEAN PATENT APPLICATION

(11) **EP 1 338 486 A2**
(43) Date of publication of application: **27.08.2003**
(21) Application number: 03001349.4
(22) Date of filing: 24.01.2003
(51) Int. Cl.: B60R 22/26, B60R 22/18

(54) **Improved web guide**

(30) Priority: 22.02.2002 US 359029; 03.05.2002 US 138390
(71) Applicant: Breed Automotive Technology, Inc., Lakeland, Florida 33807-3050 (US)
(72) Inventor: Boelstler, Richard A., Lake Orion, Michigan 48359 (US); Temple, Bayard C., Roseville, Michigan 48066 (US); Desmarais, Robert J., Lake Orion, Michigan 48362 (US)
(74) Representative: Gislon, Gabriele

(57) **Abstract**

A seat belt system including a web guide (150) having a support surface (192) for supporting a portion of a seat belt (30). The shape of the support surface is based upon the natural curvature of the seat belt. To determine the natural curvature of the seat belt a segment of the belt is folded to form a loop. The unstressed shape of this looped portion of the seat belt is defined by and corresponds to the natural curvature of the seat belt. The support surface, in one embodiment, is realized by a circular cylinder of radius that is circumscribed within the loop.

## Description

### BACKGROUND AND SUMMARY OF THE INVENTION

This is a regularly filed utility patent application claiming priority of provisional patent application 60/359,029, filed February 22, 2002.

The present invention relates to seat belt web guides and more particularly to web guides that can easily be integrated within a vehicle seat.

Web guides, which in some contexts are called D-rings, provide a support surface upon which a seat belt rides or slides. The web guide support surface can be stationary or it can be realized by a roller. The following patents are illustrative of some types of web guides: US 5,658,051 and GB 2174888A and are incorporated herein by reference. The surface is often coated with a slick material to reduce sliding friction with the seat belt. As is known, the seat belt motion is opposed by frictional forces from a variety of sources in the seat belt system. The conventional wisdom has been that the use of a support surface with a small seat belt contact area is desirable to lower the effect of friction. This small support surface is often realized using a small diameter rod or roller.

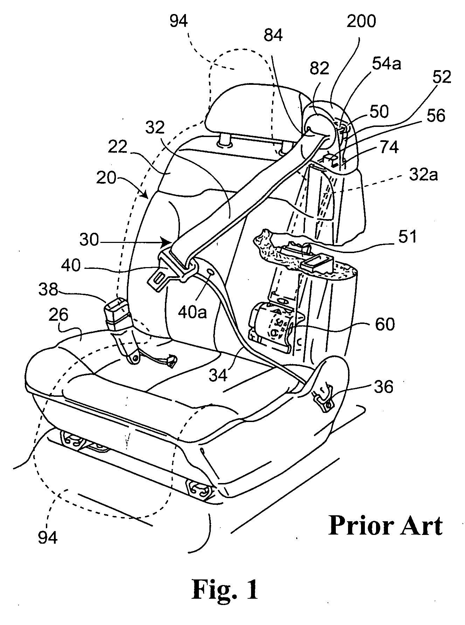

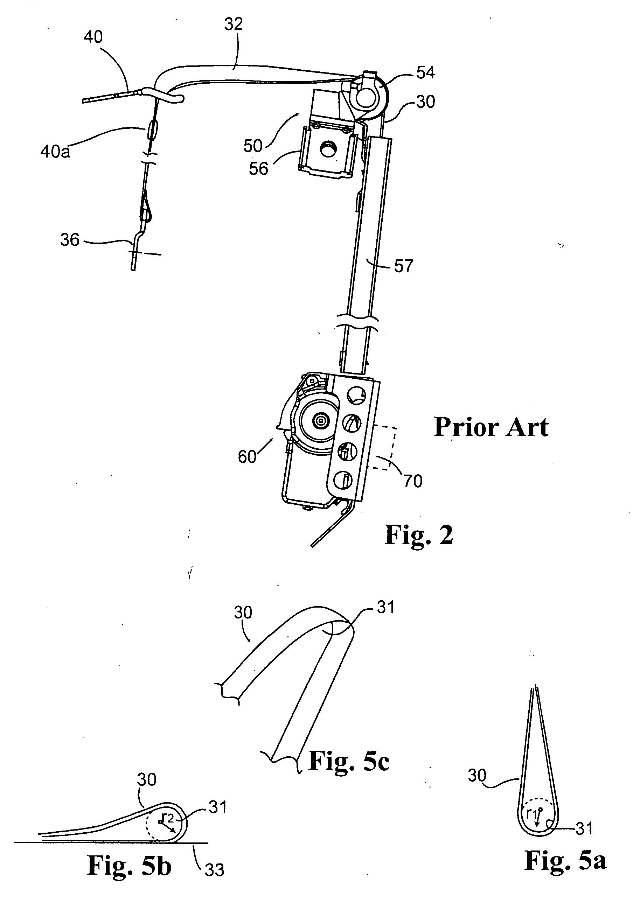

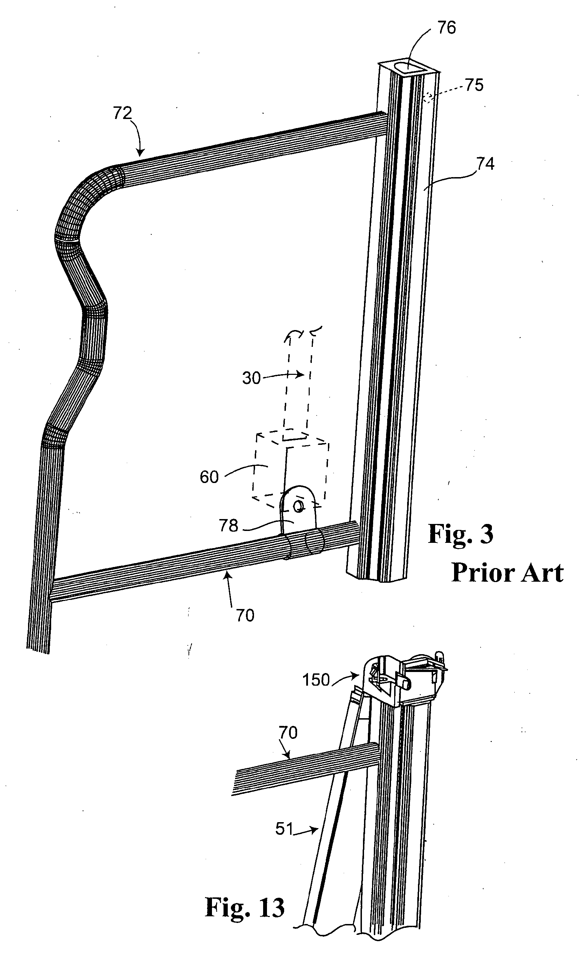

FIGURE 1 shows a 3-point seat belt system 20 that has been integrated within a vehicle seat 22. The seat 22 includes a seat back 24 and a seating surface or cushion 26. The seat belt system has a tongue 40 that is lockingly received within a buckle 38. Located below the tongue 40 is a stop button 40a of known construction. The tongue divides the safety belt 30 into shoulder belt 32 and lap belt 34 portions. The lap belt is appropriately anchored to the floor or to the seat frame by a known type of anchor mechanism such as 36. While not illustrated, the buckle 38 is connected to another anchor mechanism. The shoulder belt 32 extends from a seat belt retractor, which is not shown in FIGURE 1; the retractor provides the third anchor point. The seat belt extends from the retractor up through the seat back 24 to a web guide 50. The web guide or web guide mechanism 50 includes a frame 52 that supports a stationary bar 54a (FIGURE 1) or rotatably supports a roller 54 (FIGURE 2) each of which defines a support surface. The use of a roller is thought to reduce friction below that achievable through the use of a stationary support surface such as the bar. The use of a roller, however, increases the system cost. The web guide is often covered by a housing or cover 200, which can be a part of the seat back or a separate unit. Additionally, this housing can include or at least support a plate or bezel 82 having a narrow slit 84 through which the seat belt 30 passes.

FIGURE 2 diagrammatically illustrates the relationship of the seat belt 30, the roller 54 and retractor 60. The tongue 40 and anchor 36 are shown in free-space. The retractor 60, as also shown in FIGURE 3, is conveniently attached to a portion of a seat belt frame 70 such as by a bracket 78. The frame 70 is conveniently concealed within the upholstered back 24 of the seat 22. The seat back frame 70 comprises a support structure generally shown as 72 that includes a hollow, typically vertically oriented tube or post 74 having an opening 76 of a desired size and shape. The web guide's base 56 can be inserted within the opening 76 and supported by the post 74. The web guide 50 is secured to the post in a number of ways such as by using an appropriate fastener, which can be received through an opening in the base 56 and in the tube.

The webbing or seat belt 30 extends from the retractor to the web guide 50. The seat belt will in general approach the location of the web guide from the location of the retractor at an angle (the input angle) relative to the frame (or other reference system). The seat belt will also exit the web guide and extend over the occupant's shoulder at an exit angle, which is also defined by the mounting geometry of the components of the system. Also, to prevent the seat belt from becoming ensnared upon any of the internal structures of the seat back, the system 20 may additionally include a tube 51 (see FIGUREs 1 and 2 but not shown in FIGURE 3) through which the seat belt can slide.

Reference is briefly made to FIGURE 4, which diagrammatically illustrates the construction of a typical seat belt 30. This seat belt includes a plurality of bundles of flexible weft fibers 90 and a plurality of crossing warp fibers 92. Each fiber 90 or 92 can be a mono-filament or a bundle of fibers. In a broad sense, each of the weft fibers or the bundles can be thought of as a beam and the seat belt as a complex beam. If the beam, that is, the seat belt 30 is bent about a radius that is smaller than the belt's radius of natural curvature, which is shown in FIGUREs 5a and 5b, excess energy is used, dissipated or expended to bend the beam (seat belt) into this more compact configuration. The energy dissipation has a similar effect on system performance, as does friction. Consequently, as the seat belt deforms to the contour of support surfaces having a smaller radius, the energy to bend the seat belt increases. One effect of this energy loss is that more effort is needed to extract and retract the seat belt. Another effect of this energy loss is that a larger retractor rewind spring is needed to retract the seat belt back onto the spool of the retractor. As the size of the spring increases (to overcome the forces needed to bend the seat belt as well as the forces needed to overcome normal frictional forces acting on the seat belt) the force that is exerted on the shoulder of the occupant 94 (by the seat belt) will also increase, which for some passengers is a source of discomfort.

As can be seen, even if a web (seat belt) support surface having a small area is coated with or made of a slick material (as suggested by the prior art), energy is still expended as the belt (beam) bends or is bent over the support surface.

It is an object of the present invention to provide a system having a web guide characterized by a reduction of energy-dissipative forces.

Accordingly the invention comprises: a seat belt system including a web guide having a support surface for supporting a portion of a seat belt. The shape of the support surface is based upon the natural curvature of the seat belt. To determine the natural curvature of the seat belt a segment of the belt is folded to form a loop. The shape at the apex of this folded-over portion of the seat belt corresponds to the natural curvature of the seat belt. A support surface of a web guide with this shape or one having a radius greater than that defined by the natural curvature will reduce the energy dissipated at the web guide by the bending of the seat belt. In the preferred embodiment the support surface of a web guide is realized by a circular cylinder of radius r₁. The cylinder is obtained by inserting a virtual cylinder at the apex of the loop or by circumscribing a circle, also at the apex of the loop. In the preferred embodiment the radius of the support surface of the web guide is equal to or greater than r₁, which corresponds to the natural curvature of the seat belt. In this manner the dissipative forces generated by the bending of the belt are reduced in comparison with web guides of the prior art. Rather than approximating the natural curvature by a cylinder, the support surface can also be realized by molding a surface that has the precise curvature of the undersurface of bent-over webbing.

Many other objects and purposes of the invention will be clear from the following detailed description of the drawings.

### BRIEF DESCRIPTION OF THE DRAWINGS

FIGURE 1 shows a prior art seat belt system.
FIGURE 2 diagrammatically illustrates the shoulder belt extending from a retractor about a support roller.
FIGURE 3 shows a seat frame and retractor mounted thereto.
FIGURE 4 diagrammatically illustrates the construction of a seat belt (webbing).
FIGUREs 5a, 5b and 5c illustrate a segment of seat belt webbing folded over to form various loops.

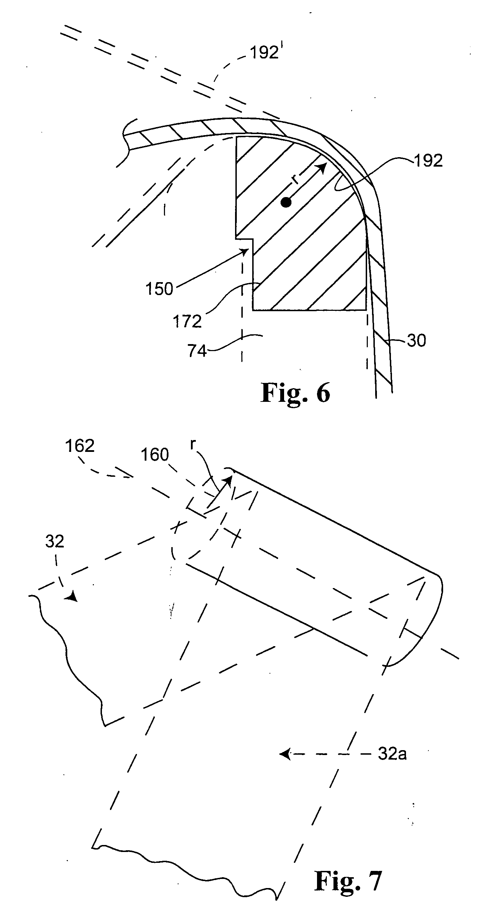

FIGURE 6 diagrammatically shows the shoulder belt extending about a one-piece web guide, which incorporates the present invention.
FIGURE 7 shows the orientation of a cylinder, which is used to form the support surface of the web guide.

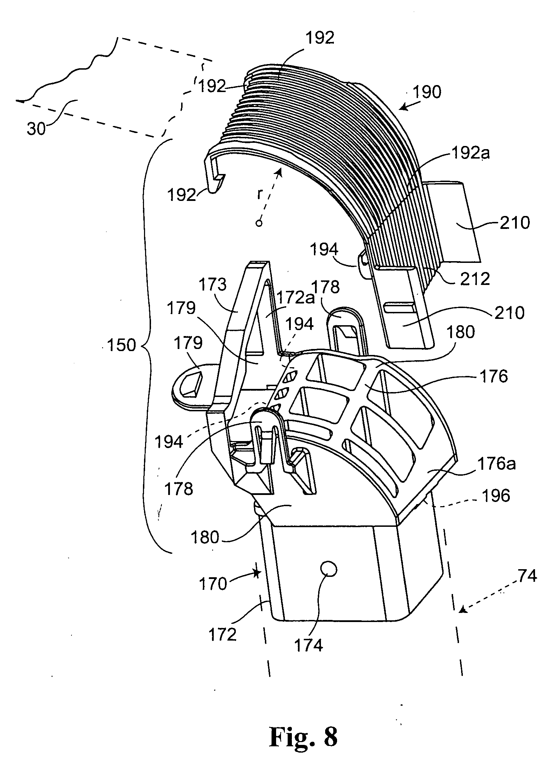

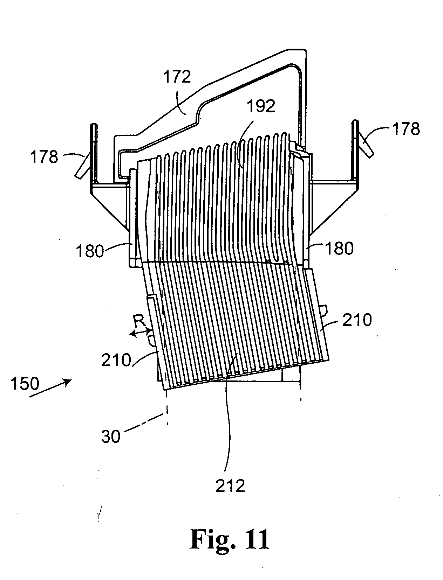

FIGURE 8 is an assembly view showing a two-piece web guide.

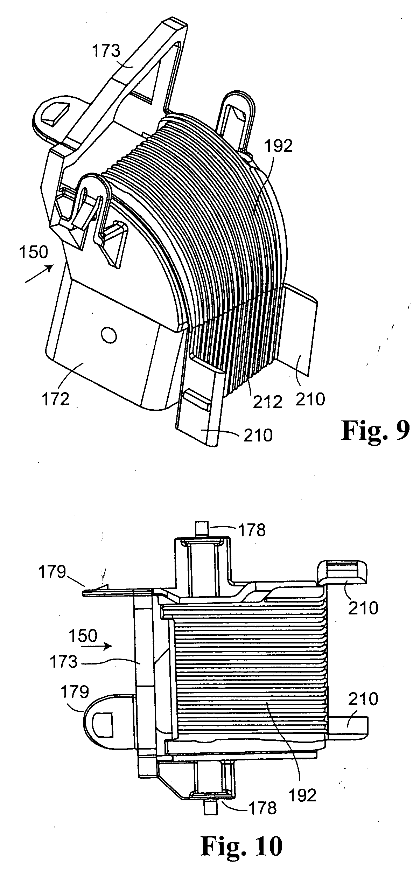

FIGURE 9 shows an assembled web guide.
FIGURE 10 is a top view of a web guide.

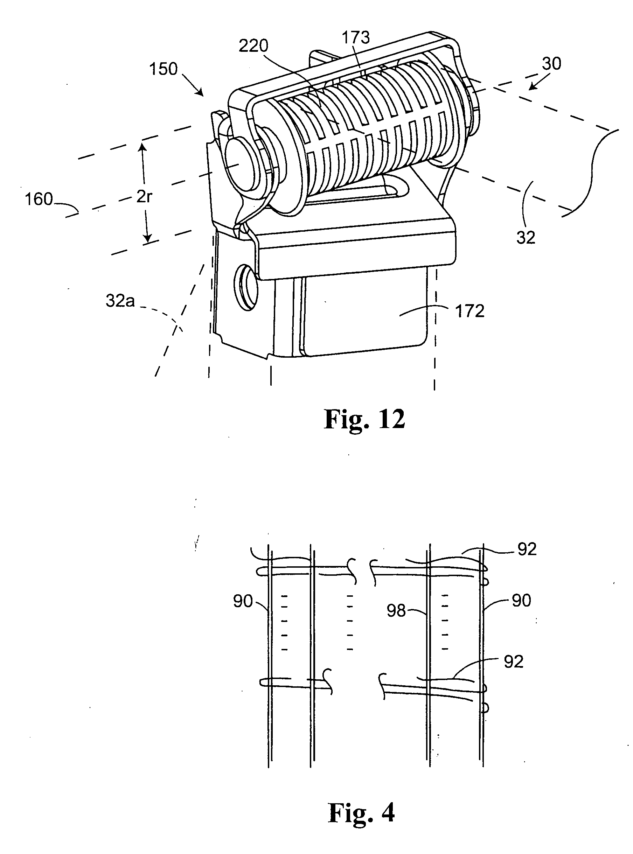

FIGURE 11 is a rear plan view of a web guide.
FIGURE 12 is an alternate embodiment of the invention using a roller.

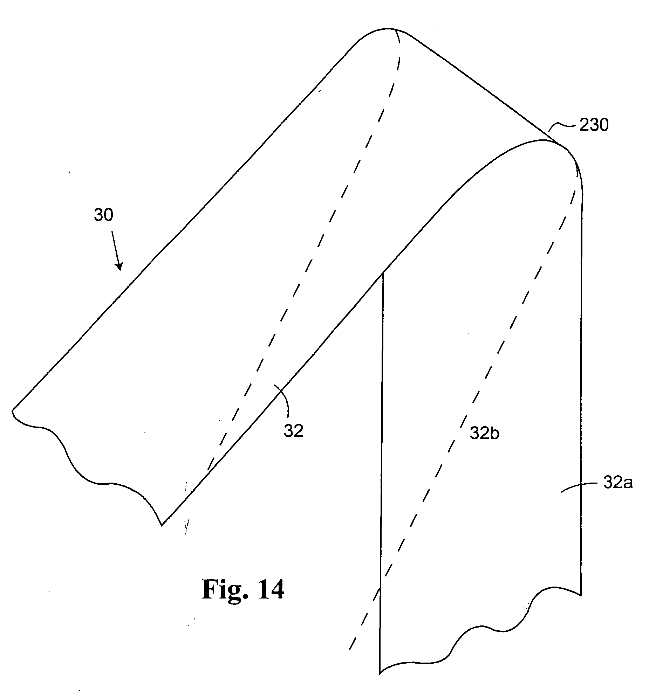

FIGURE 13 is a partial view of a seat frame with the web guide of the present invention seated within a frame post.
FIGURE 14 shows an alternate approach to the invention.

### DETAILED DESCRIPTION OF THE DRAWINGS

Reference is briefly made to FIGUREs 5a and 5b (also see FIGURE 14). FIGURE 5a shows a length of seat belt webbing that is held vertically (with the loop on top or at the bottom) and folded upon itself (with the webbing parallel to itself or crisscrossed, as shown in FIGURE 5c) forming a loop 31. With a downwardly extending loop, the legs of the loop can be held together at a distance of about 18-12 inches (45.7-30.5 cm) from the apex of the loop. This loop 31 shows the seat belt in a relaxed or low energy state under the influence of its own weight and gravity. The inner portion of this loop is generally cylindrical or generally circular (in cross-section) in shape wherein a circle or cylinder having the largest radius r₁ can be inscribed therein. As can be appreciated, if the curvature of a support surface of a web guide is made equal to or greater than r₁, a minimum level of energy dissipation will occur as the seat belt bends or is bent about this curved guide or support surface. This design is a significant improvement over the prior art. The support surface of the web guide can be stationary or formed as a roller.

As will be seen with some seat belt configurations, the seat belt will approach and exit the support surface of a web guide at respective input and exit angles. These various angles are defined by the mounting geometry of the components of the seat belt system. The natural curvature of the seat belt in this type of configuration can be identified by crisscrossing the seat belt upon itself when forming the loop 31 as shown in FIGUREs 5c and 14.

Reference is made to FIGURE 5b, which illustrates an alternate methodology of determining the unstressed or low energy natural curvature of the belt. In this example, a length of seat belt webbing is placed upon a work surface 33 and this length of webbing is folded upon itself. The circle of radius r₂, which defines the shape of the inside of the formed loop 31, will not differ greatly from the circle of radius r₁. The seat belt can also be crisscrossed to approximate the input and exit angle mounting configuration in the orientation as well when identifying its natural curvature.

FIGURE 6 diagrammatically shows a web guide 150 incorporating the present invention. The web guide 150 has a seat belt or web support surface 192 and a base 172. The support surface 192 is as wide or slightly wider than the width of the webbing 30. The support surface is cylindrical having a radius r, which is equal to or greater than the radii r₁ or r₂ (depending upon the method of determining the natural curvature). The web guide base 172 is designed to be attached to a portion of the vehicle frame 70 or, alternatively, to be attached directly to one of the support pillars, such as the B or C-pillar of a vehicle. As illustrated, the base 172 is designed to fit within the opening 76 of the hollow tube 74 of the frame 70. In FIGURE 6 the web guide 150 is of a one-piece construction. In the preferred embodiment the base and the seat belt support surface are separate elements, which permits each to be made from preferred materials more suited to the functions of each part.

In FIGURE 6 the seat belt webbing 30 approaches the surface 192 vertically from below, envelops about one-quarter of the circular periphery of the guide 150 and extends outwardly toward the seated occupant (who would have the tongue locked in the buckle). Depending on the input angle, as the seat belt approaches the web guide and the exit angle from the support surface, the seat belt may be in contact with more or less than 90 degrees of the support surface. This variation in the manner in which the seat belt contacts the support surface of the guide is also shown in phantom lines 192' in FIGURE 6.

The support surface 192 of the web guide 150 in the preferred embodiment is cylindrical or at least a portion of the cylinder is used as the support surface. In view of the input and exit angles defined by the location of the retractor, the location of the web guide 150 and the location of a nominally sized occupant, the axis 162 of a cylinder 160, which defines the support surface 192, will in general be oriented at a compound or complex angle (relative to the seat frame or other reference point or reference system). This orientation is used so that the seat belt will lie flat on the support surface and is shown diagrammatically in FIGURE 7. Conceptually the above orientation can be obtained by locating the axis 162 horizontal and rotating the cylinder first about a vertical axis and then about an axis perpendicular to the axis of the cylinder. The rotated cylinder is held in the desired orientation by the frame of the web guide 150 as shown in the following figures. Since the seat belt will only traverse across a portion of the periphery of the cylinder only that portion is included in the actual support surface.

Reference is made to FIGUREs 8 - 11, which illustrate a two-piece web guide 150. The web guide comprises a molded frame 170, which in the preferred embodiment is manufactured of a glass-reinforced resin. Attached to this frame portion is a molded webbing support member 190 (shown in FIGURE 8), which is typically manufactured of a plastic having a low coefficient of friction. Portions of the support member 190 that support the seat belt are cylindrically shaped. These portions correspond to the cylinder 160 mentioned above. In the preferred embodiment the webbing support member is snap-connected to the frame 170 to avoid the use of separate and discrete fasteners such as screws, bolts and rivets. The frame 170 includes a base or projection 172 that fits within the opening 76 and is secured to the tube or post 74. As appropriate, a fastener (not shown) is received through opening 174 in the base 172 and through a complementary opening 75 in the post 74 (see FIGURE 3). The web guide frame 170 includes a support or exterior surface 176, which supports the underside of the web support member 190. This support surface is also cylindrically shaped with a center that is common to the cylinder defining certain cylindrically shaped portions of the support member. The support or exterior surface 176 can be a continuous surface but may have portions removed (as shown in FIGURE 8) to lessen the weight of the base and still retain structural integrity.

As mentioned above the support surface 192 is defined by a radius r (equal to or greater than r₁ or r₂). In practice, the general shape or curvature of the support surface 176 should mirror the shape of surface 192 (that is cylindrical with a slightly different radius); this permits the support member to be as thin as possible. In the preferred embodiment the radius R is about 42 mm, which will vary with the bending properties of the seat belt webbing used.

As with the prior art, the web guide 150 may also include a cover 200 (such as the cover of FIGURE 1) that is snapped onto the frame 170. The manner by which the cover is supported is not pertinent to the present invention. However, to accommodate the cover, the frame 170 may optionally include a plurality of flexible, locking tabs 178, which are situated in opposing side walls 180 of the frame 170. The sides are also supported by an integrally molded crossbar 173, which links the opposing sides 180 to prevent same from flexing under load.

The seat belt will typically exit the seat through an opening in the seat proximate the location of the web guide. As mentioned above, decorative bezel 82 is used to cover this opening. The seat belt 20 extends through a slit 84 (see FIGURE 1) in the bezel. The web guide 150 may include other locking tabs 179 to which the bezel can be snapped and held. One such tab 179 is shown in FIGURE 8; a second tab 179 can extend from leg 172a, which supports the crossbar 170.

With regard to the webbing support member 190 shown in FIGURE 8, this member includes a cylindrical (radius r) web support surface 192, which may be smooth or grooved (as shown) or rippled (to reduce the contact surface in contact with the seat belt and to further reduce contact friction between the seat belt 30 and the support surface 192).

The support member 190 includes two sets of flexible tabs 192, which are snapped into and received within recesses formed under the surface 176 (or near the top of this surface) of the frame. The support member 190 also includes another flexible tab 194 (or opposed set of such tabs), which is centrally located toward a middle-to-lower portion of the member 190 (on its undersurface). This tab 194 snaps into a recess (or undercut) 196 molded into the underside of a lower portion 176a of the support surface 176. The support member 190 can optionally include a pair of extending guides 210, which join the lower portion of the support surface 192. As can be seen the web support surface 192 includes an extension 212 between the guides 210 and does not include the radial profile of the web support surface 192. In the preferred embodiment this support surface 212 is straight (and can be angled).

FIGURE 9 shows an assembled web guide 150, FIGURE 10 is a top view of the web guide, while FIGURE 11 is a view looking over the web support surface 192 from the rear of the seat to the front of the seat. As mentioned above, the support surface extension 212 is flat but can also be angled since the seat belt can approach the web guide at an input angle (A) which is more clearly shown in FIGURE 1.

FIGURE 12 shows an alternate web guide 150a in which the stationary, cylindrical support surface 192 has been replaced with a roller 220 with a radius dimension of the same amount as that of the stationary cylindrical support surface 192.

FIGURE 13 is a partial view of a seat frame with the web guide of the present invention seated within a frame post. The web protecting and guiding tube 51 is seen attached to and extending from the web guide 150 at a representative input angle.

Reference is briefly made to FIGURE 14, which shows a section of seat belt 30, which is manipulated to stand in a generally vertical position only supported by its own strength and stiffness. By way of example, portion 32a of the belt is disposed generally vertically in a manner as it would extend from the retractor (but can be posed to an angled position-see numeral 32b to reflect a mounting arrangement of FIGURE 13) and portion 32 is shown moved over to a position the webbing would take as it extends from a web guide (that would be located at the bend 230 in the webbing) across the occupant with the seat belt tongue locked in the buckle. As can be appreciated, this bend is defined by the natural curvature of the belt. If a mold is made of the undersurface of the seat belt, the curvature of the mold precisely defines the natural curvature for the web support surface of a web guide that is desired to support the belt at this orientation. Therefore the support surface 192 of a web guide may be defined by the steps of orienting the seat belt in a configuration it would take while in use within a vehicle. Care should be taken to avoid using external support structures to support the seat belt as these structures may alter the natural curvature of the seat belt. Thereafter a mold is made of the undersurface of the seat belt proximate the bend in the belt, thereafter transposing or including this shape into the web guide to be installed with a seat.

Many changes and modifications in the above-described embodiment of the invention can, of course, be carried out without departing from the scope thereof. Accordingly, that scope is intended to be limited only by the scope of the appended claims.

## Claims

1. A web guide (150) for supporting a portion (32) of a seat belt (30) comprising a seat belt support surface, the support surface following a contour of the natural curvature of the seat belt.

2. A web guide (150) as defined by Claim 1 wherein the natural curvature corresponds to the largest circular cylinder of radius r, inscribed within the apex of a folded-over segment of seat belt, wherein
the web guide includes a seat belt support surface upon which the seat belt slides, the support surface being a portion of the cylinder with a radius equal to or greater than r.

3. The web guide as defined in Claim 2 wherein an axis of the cylinder is oriented at a compound angle relative to a frame of reference.

4. A web guide (150) for supporting a portion (32) of a seat belt (30), the seat belt when bent over to form a loop being **characterized by** a natural curvature and wherein the web guide includes a stationary seat belt support surface having a curvature that is no less than the natural curvature of the seat belt.

5. The web guide as defined in Claim 4 wherein the curvature of the support surface is defined by a cylinder having a radius r₁ wherein r₁ is equal to the radius of a circle circumscribed within the loop.

6. The web guide as defined in Claim 1 wherein the web support is one of stationary and rotary.

7. The web guide as defined in Claim 5 wherein an axis of the cylinder is oriented at a compound angle relative to a frame of reference.
